# EUROPÄISCHE PATENTSCHRIFT

(11) **EP 1 153 362 B1**
(45) Veröffentlichungstag und Bekanntmachung des Hinweises auf die Patenterteilung: **03.12.2003**
(21) Anmeldenummer: 00903646.8
(22) Anmeldetag: 25.01.2000
(51) Int. Cl.: G06K 19/07

(54) **KONTAKTLOSES DATENÜBERTRAGUNGSSYSTEM UND VERFAHREN ZUR KONTAKTLOSEN DATENÜBERTRAGUNG**
CONTACTLESS DATA TRANSMISSION SYSTEM AND METHOD FOR CONTACTLESSLY TRANSMITTING DATA
SYSTEME DE TRANSFERT DE DONNEES SANS CONTACT ET PROCEDE POUR LE TRANSFERT DE DONNEES SANS CONTACT

(30) Priorität: 29.01.1999 EP 99101539
(43) Veröffentlichungstag der Anmeldung: 14.11.2001
(73) Patentinhaber: Infineon Technologies AG, 81669 München (DE)
(72) Erfinder: KUTTRUFF, Jürgen, D-81675 München (DE); REINER, Robert, D-85579 Neubiberg (DE)
(74) Vertreter: Epping Hermann & Fischer
(86) Internationale Anmeldenummer: EP0000636
(87) Internationale Veröffentlichungsnummer: WO00045330

(56) Entgegenhaltungen:
- EP-A- 0 170 716
- EP-A- 0 297 688
- EP-A- 0 492 482
- WO-A-96/29673
- WO-A-98/29830
- US-A- 5 235 326

## Beschreibung

Die vorliegende Erfindung betrifft ein kontaktloses Datenübertragungssystem, das insbesondere für Übertragungssysteme mit sogenannten kontaktlosen Chipkarten geeignet ist. Diese Systeme ermöglichen einen Datenaustausch zwischen der Chipkarte und einer meist stationären Schreib/Lesestation mit dem Ziel einer Identifizierung des Kartentinhabers, zur Bewirkung einer bargeldlosen Bezahlung oder ähnlichem.

Für den Datenaustausch zwischen der Chipkarte und dem Schreib/Lesegerät gibt es verschiedene Übertragungsverfahren, die Gegenstand verschiedener, teilweise noch in Bearbeitung befindlicher Normen sind. Diese Normen, wie die ISO/IEC 10536, ISO/IEC 14443 oder ISO/IEC 15693 legen dabei unter anderem die Datenrate der ausgetauschten Daten, deren Kodierung, die Modulationsart und die Trägerfrequenz der übertragenen Signale fest.

Bislang existieren unterschiedliche Chipkarten und Schreib/Lesegeräte, die sich insbesondere in dem maximal zulässigen Abstand zwischen der Karte und dem Schreib/Lesegerät unterscheiden. Systeme für den sogenannten "Proximity-Bereich" funktionieren bis zu Abständen von ca. 10 cm, Systeme für den sogenannten "Vicinity-Bereich" bis zu einem Abstand von ca. 1 m.

Aus der WO 96/29673 ist ein Transponder für eine Chipkarte bekannt, der aus den Eigenschaften der empfangenen elektromagetischen Welle darauf schließt, mit welchem Standard die Schreib-Leseeinrichtung arbeitet. Der Transponder wird dabei auf dem erkannten Standard eingestellt. Für das Erkennen, ob der Transponder im Nah- oder Fernfeld ist, wird der Stereoeffekt ausgenutzt.

Nachteil dieses bekannten Systems ist es, daß der Transponder zwar nach mehreren Standards betreibbar ist, aber keine Rücksicht darauf genommen wird, welcher Standard für den Transponder am besten geeignet ist.

Aufgabe der Erfindung ist es, ein kontaktloses Datenübertragungsgerätgerät mit einem Transponder vorzunehmen, bei dem der für den Transponder geeignete Standard auswählbar ist.

Diese Aufgabe wird durch ein Datenübertragungssystem gemäß Patentanspruch 1 gelöst.

Danach weist ein Transponder bzw. eine Chipkarte des Übertragungssystems eine Empfangseinheit mit einer Empfangsschnittstelle zum Empfang eines von der Schreib/Lesestation gesendeten HF-Signals und mit einer Ausgangsklemme zum Bereitstellen eines in der Empfangseinheit aus dem HF-Signal gebildeten Datensignals auf. Die Empfangseinheit weist dabei Mittel zum Empfang und zur Verarbeitung von HF-Signalen auf, die unterschiedlich moduliert und/oder kodiert sind. Die Empfangseinheit ist insbesondere geeignet HF-Signale zu empfangen, zu demodulieren und zu dekodieren, die gemäß einem oder mehreren der bereits existierenden Übertragungsstandards erzeugt und übertragen wurden. Der Empfangseinheit ist eine Verarbeitungseinheit zur Verarbeitung des aus dem HF-Signal gewonnenen Datensignals nachgeschaltet.

Der Transponder weist des weiteren eine Detektionseinheit zur Bereitstellung eines von der Leistung des empfangenen HF-Signals abhängigen Steuersignals auf. Dabei sind die Empfangseinheit und/oder die Verarbeitungseinheit mittels des Steuersignals ansteuerbar. Dem Steuersignal liegt eine Information über die Leistung des empfangenen HF-Signals und damit über die Entfernung der Chipkarte von der Schreib/Lesestation zugrunde. Abhängig von der Stärke des empfangenen HF-Signals ermöglicht der Transponder des erfindungsgemäßen Übertragungssystems so eine Einstellung der Empfangseinheit und/oder der Verarbeitungseinheit auf das Übertragungsverfahren, das für den ermittelten Abstand zwischen Chipkarte und Schreib/Lesegerät optimal ist.

Vorteilhafte Ausgestaltungen der Erfindung sind Gegenstand der Unteransprüche.

Eine Ausführungsform der Erfindung sieht vor, daß der Transponder eine an die Verarbeitungseinheit angeschlossene Sendeeinheit aufweist, die Mittel zur Generierung von wenigstens zwei unterschiedlich modulierten und/oder kodierten HF-Signalen aus einem von der Verarbeitungseinheit zugeführten Datensignal besitzt. Die Sendeeinheit ist dabei vorzugsweise abhängig von dem Steuersignal zur Erzeugung unterschiedlich modulierter und/oder kodierter HF-Signale, die zu verschiedenen Übertragungsstandards gehören, ansteuerbar.

Entfernt sich der Benutzer während einer Datenübertragung, die auf einem ersten Übertragungsverfahrens basiert, das beispielsweise wegen einer hohen Datenrate einen geringen Abstand zwischen Chipkarte und Schreib/Lesegerät erfordert, von dem Schreib/Lesegerät, so ermöglicht das erfindungsgemäße System durch Umschalten auf ein anderes Übertragungsverfahren, das auch noch bei größeren Abständen sicher funktioniert, daß die begonnene Datenübertragung beendet oder zumindest ohne Datenverlust abgebrochen werden kann.

Die von der Empfangseinheit und der Sendeeinheit beherrschten Modulations- und Kodierverfahren richten sich dabei insbesondere nach Übertragungsstandards, die für unterschiedliche Abstände zwischen Chipkarte und Schreib/Lesegerät geschaffen wurden. Diese Standards unterscheiden sich insbesondere in der Datenrate, die für den Proximity-Bereich nach ISO 14443 größer als für den Vicinity-Bereich nach ISO 15693 ist.

Eine Ausführungsform der Erfindung sieht vor, die Detektionseinheit direkt an die Empfangseinheit anzuschließen, um letztere abhängig von dem Steuersignal anzusteuern. Wohingegen eine weitere Ausführungsform der Erfindung vorsieht, die Detektionseinheit an die Verarbeitungseinheit anzuschließen und die Empfangseinheit an die Verarbeitungseinheit anzuschließen, um die Empfangseinheit abhängig von dem Steuersignal über die Verarbeitungseinheit anzusteuern. Letztere Ausführungsform bietet den Vorteil, daß die Verarbeitungseinheit aus dem Steuersignal die Notwendigkeit zu einem Wechsel des Übertragungsverfahrens erkennt, weil die Chipkarte beispielsweise von dem Schreib/Lesegerät entfernt wurde, oder daß die Verarbeitungseinheit die Möglichkeit erkennt, zu einem Übertragungsverfahren mit höherer Datenrate zu wechseln, weil die Chipkarte weiter an das Schreib/Lesegerät angenähert wurde. Die Verarbeitungseinheit kann dann die Sendeeinheit und die Empfangseinheit an die geänderten Erfordernisse anpassen und das jeweilige Übertragungsverfahren bei der Verarbeitung des empfangenen Datensignals und der an die Schreib/Lesestation zu übersendenden Daten zu berücksichtigen. Diese Ausführungsform bietet weiter den Vorteil, daß in der Verarbeitungseinheit neben dem Steuersignal weitere Parameter berücksichtigt werden können, die einen Wechsel des Übertragungsverfahrens notwendig erscheinen lassen.

Die Empfangseinheit weist vorzugsweise wenigstens zwei Signalverarbeitungseinheiten zum Empfang und zur Verarbeitung von zwei unterschiedlich modulierten und/oder kodierten HF-Signalen auf. Die Signalverarbeitungseinheiten weisen dabei jeweils einen Empfänger, einen Demodulator und einen Dekodierer auf. Je nachdem, wie sich die zu verarbeitenden HF-Signale unterscheiden können die Signalverarbeitungseinheiten eine oder mehrere der Komponenten gemeinsam haben. Unterscheiden sich die HF-Signale beispielsweise lediglich nach Modulationsart und Kodierung, nicht jedoch in der Trägerfrequenz, genügt ein Empfänger, der auf die Trägerfrequenz abgestimmt ist und der den beiden Signalverarbeitungseinheiten gemeinsam sein kann. Unterschieden sich die Signale lediglich in ihrer Kodierung, können Empfänger und Demodulator gemeinsam genutzt werden.

Zur Einstellung der Empfangseinheit auf die Verarbeitung von einem der möglichen HF-Signale sind die Komponenten der Signalverarbeitungseinheiten vorzugsweise einzeln abhängig von dem Steuersignal ansteuerbar. Die nicht benötigten Komponenten werden dabei aus Stromsparerwägungen vorzugsweisen abgeschaltet.

Die Detektionseinheit ist zur Erzeugung des Steuersignals vorzugsweise an eine Ausgangsklemme der Empfangseinheit angeschlossen. Die Empfangseinheit verfügt neben den Mitteln zur Demodulation und Dekodierung des HF-Signals über eine Spannungsversorgungseinheit mit einem Spannungsregler, die durch Gleichrichten und Glätten des HF-Signals eine Versorgungsspannung für die Schaltungskomponenten des Transponders zur Verfügung stellt. Ein Spannungsregler dient dabei zur Aufrechterhaltung einer wenigstens annäherungsweise konstanten Versorgungsspannung. Spannungsschwankungen, die sich durch ein leistungsstarkes HF-Signal ergeben, werden durch den Spannungsregler ausgeregelt. An dem Spannungsregler steht damit eine Information über die Leistung des empfangenen HF-Signals zur Verfügung, die der Detektionseinheit zur Bildung des Steuersignals zugeführt werden kann, wie gemäß einer Ausführungsform der Erfindung vorgesehen ist.

Das Schreib/Lesegerät weist Mittel auf, um ein von dem Transponder übermitteltes Signal zu empfangen und abhängig von dem empfangenen Signal das Übertragungsverfahren umzuschalten. Vorzugsweise weist das Schreib/Lesegerät des erfindungsgemäßen Übertragungssystems eine zu dem Transponder korrespondierende Anordnung aus Empfangseinheit, Verarbeitungseinheit und Sendeeinheit auf, wobei die Empfangseinheit Mittel zum Empfang und zur Verarbeitung von HF-Signalen aufweist, die auf wenigstens zwei unterschiedliche Weisen moduliert und/oder kodiert sind. Die Sendeeinheit weist vorzugsweise Mittel zur Generierung entsprechender unterschiedlich modulierter und/oder kodierter HF-Signale auf.

Eine weitere Ausführungsform der Erfindung sieht vor, daß das Schreib/Lesegerät Mittel zum Ermitteln einer Fehlerrate der von dem Transponder empfangenen Signale und Mittel zum Umschalten des Übertragungsverfahrens abhängig von der Fehlerrate aufweist.

Der Transponder des erfindungsgemäßen Systems kann auch in Verbindung mit einem Schreib/Lesegerät betrieben werden, in welchem nicht alle Übertragungsverfahren implementiert sind, die in dem Transponder implementiert sind. Allerdings kann dann nicht zwischen allen für den Transponder möglichen Übertragungsverfahren gewechselt werden. Die Verarbeitungseinheit des Transponders ist dabei vorzugsweise so ausgebildet, daß sie einen Wechsel nur zu einem solchen Übertragungsverfahren zuläßt, für welche ein entsprechendes Request-Signal von dem Schreib/Lesegerät empfangen wird.

Gegenstand der Erfindung ist des weiteren ein Verfahren zur kontaktlosen Datenübertragung gemäß Anspruch 15.

Das Verfahren sieht insbesondere vor, in dem System zu Beginn der Übertragung, wenn also die Verarbeitungseinheit mit der Versorgungsspannung beaufschlagt wird, zunächst ein Ubertragungsverfahren einzustellen, das auch für größere Abstände zwischen Transponder und Chipkarte zuverlässig funktioniert und das Übertragungsverfahren dann abhängig von dem Steuersignal einzustellen.

Die Erfindung wird nachfolgend in Ausführungsbeispielen anhand von Figuren näher erläutert. Es zeigen:
- Figur 1:: Blockschaltbild eines Transponders des erfindungsgemäßen Übertragungssystems mit Empfangseinheit, Detektionseinheit, Verarbeitungseinheit und Sendeeinheit;
- Figur 2:: Blockschaltbild eines Transponders mit detaillierterer Darstellung der Empfangseinheit;
- Figur 3:: Schaltungsbeispiel zur Ansteuerung einer Komponente der Empfangseinheit;
- Figur 4:: Detaildarstellung einer Ausführungsform eines Spannungsreglers der Empfangseinheit und einer Detektionseinheit.

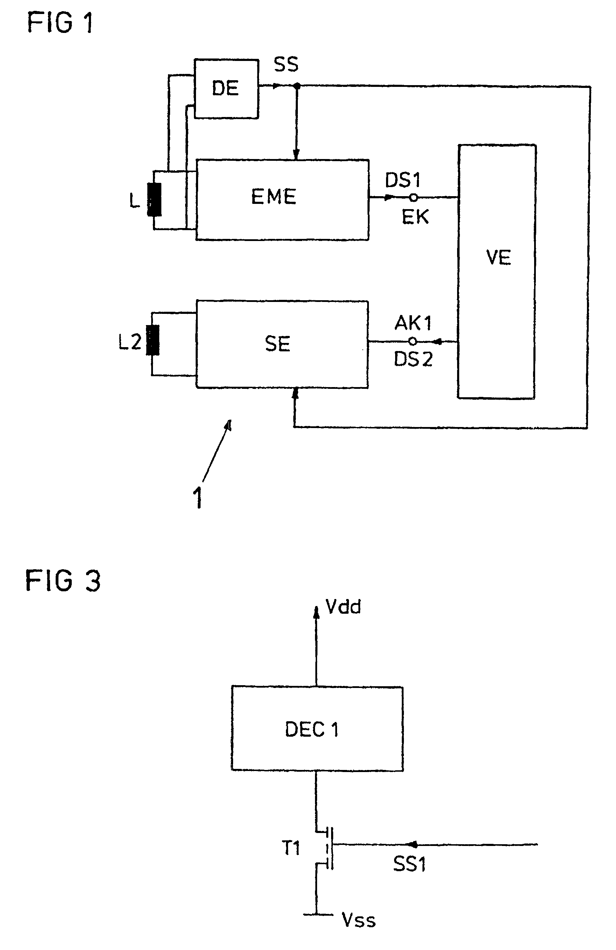

Figur 1 zeigt ein Blockschaltbild eines Transponders 1 eines erfindungsgemäßen Übertragungssystems, der für einen Datenaustausch mit einer Schreib/Lesestation gemäß verschiedenen Übertragungsstandards geeignet ist. Der Transponder besitzt dazu eine Empfangseinheit EME mit einer als Empfangsspule L ausgebildeten Empfangsschnittstelle zum Aufnehmen eines von einer Schreib/Lesestation gesendeten HF-Signals. An einer Ausgangsklemme der Empfangseinheit EME ist ein aus dem HF-Signals erzeugtes erstes Datensignal DS1 abgreifbar, das einer der Empfangseinheit EME nachgeschalteten Verarbeitungseinheit VE an einer Eingangsklemme EK1 zuführbar ist. Zur Übertragung von Daten des Transponders 1 an das Schreib/Lesegerät weist der Transponder eine Sendeeinheit SE mit einer als Sendespule L2 ausgebildeten Sendeschnittstelle auf. Die zu übermittelnden Daten werden der Sendeeinheit in Form eines zweiten Datensignals DS2 über eine Ausgangsklemme AK1 von der Verarbeitungseinheit VE zugeführt.

Der Vollständigkeit halber sei erwähnt, daß der Empfangseinheit EME und der Sendeeinheit SE eine Spule als Sende- und Empfangsspule gemeinsam sein kann.

Sowohl die Sendeeinheit als auch die Empfangseinheit sind dazu ausgebildet wenigstens zwei unterschiedlich modulierte und/oder kodierte HF-Signale zu empfangen und zu verarbeiten bzw. zu erzeugen. Die unterschiedlich modulierten und/oder kodierten HF-Signale gehören dabei zu unterschiedlichen Übertragungsstandards, die der Transponder aufgrund seines Aufbaus nutzen kann, und über die der Transponder mit einem Schreib/Lesegerät kommunizieren kann, in dem ebenfalls mindestens einer diese Übertragungsstandards implementiert ist.

Die Ubertragungsstandards können sich dabei in der verwendeten Modulation und Kodierung, der maximalen Datenrate und auch der Trägerfrequenz unterscheiden. Insbesondere sind unterschiedliche Übertragungsstandards für unterschiedliche Reichweiten, also unterschiedliche Abstände zwischen Transponder und Schreib/Lesegerät geeignet. So ist beispielsweise der Übertragungsstandard für den Proximity-Bereich nach ISO 14443 nur für Reichweiten bis maximal 10 cm geeignet, während der Übertragungsstandard für den Vicinity-Bereich nach ISO 15693 bis zu Reichweiten von 1 m geeignet ist.

Die Wahl des Übertragungsverfahrens erfolgt bei dem erfindungsgemäßen Übertragungssystem abhängig von der Leistung der empfangenen HF-Signale, die Aufschluß über den Abstand der Chipkarte bzw. Transponders von dem Schreib/Lesegerät gibt.

Der Transponder 1 weist eine Detektionseinheit DE auf, die ein von der Leistung des empfangenen HF-Signals abhängiges Steuersignal SS erzeugt, das zur Ansteuerung der Sende- und Empfangseinheit SE, EME und dort zur Auswahl des Übertragungsverfahrens dient. In dem in Figur 1 dargestellten Ausführungsbeispiel erfolgt eine Ansteuerung der Sende- und Empfangseinheit SE, EME direkt durch das Steuersignal SS. Die Detektionseinheit DE ist zur Generierung des Steuersignals SS in dem dargestellten Beispiel direkt an die Empfangsschnittstelle L der Empfangseinheit EME zur Bewertung der empfangenen Leistung angeschlossen.

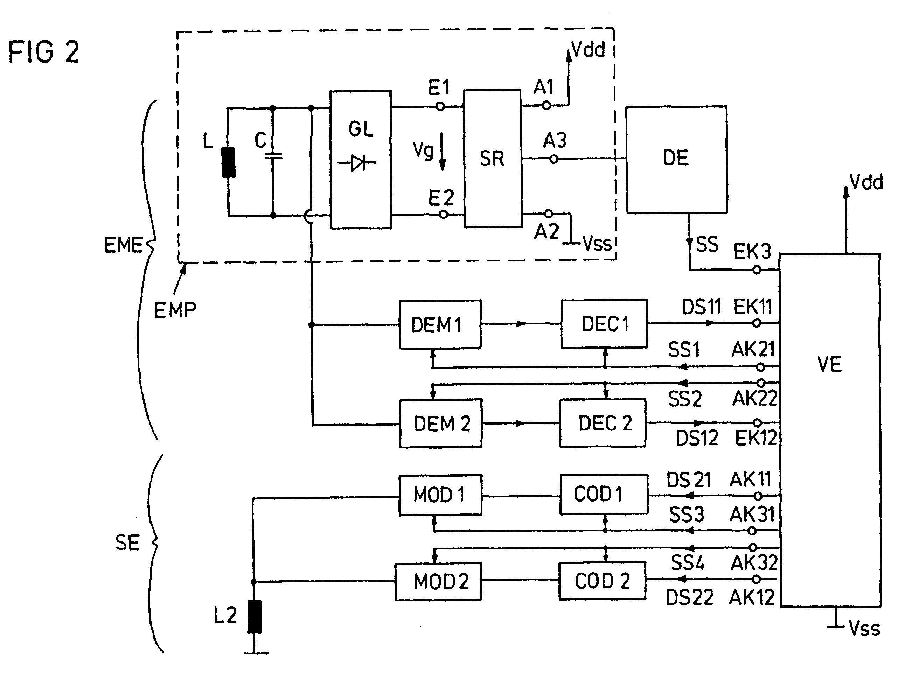

Figur 2 zeigt eine weitere Ausführungsform des erfindungsgemäßen Transponders mit der Empfangseinheit EME, der Sendeeinheit SE, der Verarbeitungseinheit VE und der Detektionseinheit DE.

Die Empfangseinheit EME weist eine erste und zweite Signalverarbeitungseinheit auf, denen ein Empfänger EMP gemeinsam ist und die des weiteren über jeweils einen Demodulator DEM1, DEM2 und jeweils einen Dekoder DEC1, DEC2 verfügen. Ausgänge der Dekoder DEC1, DEC2 sind dabei an Eingangsklemmen EK11, EK12 der Verarbeitungseinheit zur Zuführung von Datensignalen DS11, DS12 angeschlossen. Der Empfänger besitzt einen Eingangsschwingkreis aus einer Spule L und einer parallel dazu geschalteten Kapazität C. Dieser Parallelschaltung ist ein Gleichrichter GL nachgeschaltet, dem wiederum ein Spannungsregler SR nachgeschaltet ist. Ausgangsklemmen A1, A2 des Spannungsreglers SR liegen auf unterschiedlichen Potentialen Vdd, Vss, deren Differenz eine Versorgungsspannung für die Schaltungskomponenten des Transponders ergibt. Aus Gründen der Übersichtlichkeit ist in Figur 2 lediglich für die Verarbeitungseinheit VE ein Anschluß an das Versorgungspotential eingezeichnet. Es versteht, sich, daß auch die anderen Komponenten, wie die Demodulatoren DEM1, DEM2 und die Dekoder DEC1, DEC2, an die Spannungsversorgung angeschlossen sind.

Die Detektionseinheit ist bei der Ausführungsform nach Figur 2 an die Verarbeitungseinheit VE zur Zuführung des Steuersignals SS angeschlossen. Eine Ansteuerung der Demodulatoren DEM1, DEM2 und Dekoder DEC1, DEC2 der Empfangseinheit EME erfolgt mittels Steuersignalen SS1, SS2, die durch die Verarbeitungseinheit VE bei dieser Ausführungsform abhängig von dem Steuersignal SS erzeugt werden. Der Demodulator DEM1 und der Dekoder DEC1 der ersten Signalverarbeitungseinheit sind zur Ansteuerung an eine Ausgangsklemme AK21 der Verarbeitungseinheit VE, der Demodulator DEM2 und der Dekoder DEC2 der zweiten Signalverarbeitungseinheit sind zur Ansteuerung an eine weitere Ausgangsklemme AK22 der Verarbeitungseinheit VE angeschlossen.

Die Sendeeinheit SE besitzt zwei Signalverarbeitungseinheiten, die jeweils einen Kodierer COD1, COD2 und einen Modulator MOD1, MOD2 aufweisen und denen die durch die Modulatoren MOD1, MOD2 angesteuerte Sendespule L2 gemeinsam ist. Die Sendeeinheit dient zur Erzeugung eines HF-Signals aus einem Datensignal DS21, DS22, das den Signalverarbeitungseinheiten über Ausgänge AK11, AK12 der Verarbeitungseinheit VE zugeführt ist. Die Modulatoren MOD1, MOD2 und die Kodierer COD1, COD2 sind zudem an Ausgänge AK31 bzw. AK32 der Verarbeitungseinheit VE angeschlossen und abhängig von Steuersignalen SS3, SS4 ansteuerbar, die in der Verarbeitungseinheit VE abhängig von dem Steuersignal SS erzeugt werden.

Die Komponenten DEM1, DEC1, DEM2, DEC2 jeweils einer der Signalverarbeitungseinheiten der Empfangseinheit EME und die Komponenten COD1, COD2, MOD1, MOD1 jeweils einer der Signalverarbeitungseinheiten der Sendeeinheit SE dienen dabei zum Empfang und zur Verarbeitung bzw. zur Erzeugung von HF-Signalen gemäß einem der möglichen Standards. Der dargestellte Transponder ist in der Lage, zwei unterschiedlich modulierte und kodierte Signale zu verarbeiten und damit eine Übertragung nach zwei Standards zu ermöglichen. Einer Implementierung von mehr als zwei Verfahren durch Vorsehen zusätzlicher Signalverarbeitungseinheiten in der Empfangseinheit EME und der Sendeeinheit SE steht nichts im Wege.

Eine Ansteuerung der Demodulatoren DEM1, DEM2, Dekoder DEC1, DEC2, Kodierer COD1, COD2 und Modulatoren MOD1, MOD2 erfolgt vorzugsweise derart, daß die Komponenten für das Übertragungsverfahren, welches gerade nicht verwendet wird abgeschaltet werden. Um zu verhindern, daß Daten einer der beiden Signalverarbeitungseinheiten der Empfangseinheit EME an die Verarbeitungseinheit VE gelangen würde bereits genügen, nur jeweils eine der Komponenten, also Demodulator DEM1; DEM2 oder Dekoder DEC1; DEC2, abzuschalten. Gleiches gilt für die Komponenten MOD1, MOD2, COD1, COD2 der Signalverarbeitungseinheiten der Sendeeinheit SE, von der die für das Verfahren gerade nicht benötigten abgeschaltet werden. Zu Beginn eines Signalempfangs durch den Transponder besteht die Möglichkeit alle vorhandenen Demodulatoren und Dekodierer zu aktivieren und parallel die so erhaltenen Daten in der Verarbeitungseinheit VE auszuwerten. Abhängig von dem angewandten Übertragungsverfahren liefert nur eine der Demodulator-Dekodierer Kombinationen ein gültiges Datensignal, das von der Verarbeitungseinheit VE als solches erkannt wird. Die Information darüber, welche der Demodulator-Dekodierer Kombinationen das gültige Ergebnis liefert, und damit welches Verfahren von dem Schreib/Lesegerät gerade angewandt wird, kann zusammen mit dem Steuersignal SS in der Verarbeitungseinheit VE dazu verwendet werden, zu entscheiden, ob ein Wechsel des Übertragungsverfahrens stattfinden soll.

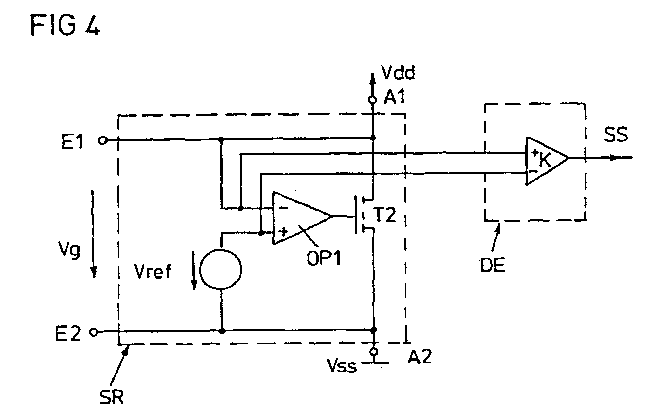

Eine Ansteuerung der Demodulatoren oder Dekoder erfolgt wie in Figur 3 beispielhaft für einen Dekoder DEC1 dargestellt ist über dessen Versorgungsspannungsanschluß. Hierbei ist ein Schalter T1 zwischen einen Versorgungsanschluß des Dekoders DEC1 und eine Klemme für das Versorgungspotential Vss geschaltet. Ein Öffnen und Schließen des Schalters und damit ein An- und Abschalten des Dekoders DEC1 erfolgt abhängig von dem Steuersignal SS1, das in der Verarbeitungseinheit VE abhängig von dem Steuersignal SS der Detektionseinheit DE erzeugt wird. Eine andere, hier nicht näher dargestellte Ausführungsform sieht vor, anstelle der oder zusammen mit der Spannungsversorgung eine, hier nicht dargestellte, Taktversorgung zu unterbinden, die der abzuschaltenden Funktionseinheit zugeführt ist.

Bei dem Ausführungsbeispiel nach Figur 2 wird davon ausgegangen, daß zwei unterschiedlich modulierte und kodierte HF-Signale durch die Empfangseinheit EME empfangen und zu Datensignalen DS11, DS12 nach Demodulation und Dekodierung umgesetzt werden. Je nach verwendetem Übertragungsstandard sind hierzu der Demodulator DEM1 und der Dekoder DEC1 oder der Demodulator DEM2 und der Dekoder DEC2 aktiv. Den Signalverarbeitungseinheiten der Empfangseinheit EME ist dabei der Empfänger EMP gemeinsam, so daß sich die mit dem dargestellten Transponder empfangbaren und verarbeitbaren HF-Signale unterschiedlicher Übertragungsstandards nicht in der Trägerfrequenz unterscheiden dürfen. Ist dies der Fall, müssen getrennte Empfänger vorgesehen werden. Die dargestellte Sendeeinheit SE erzeugt aus den Datensignalen DS21, DS22 unterschiedlich modulierte und kodierte HF-Signale entsprechend der in den Kodierern COD1, COD2 und Modulatoren MOD1, MOD2 implementierten Kodierungs- und Modulationsverfahren. Die Sendeeinheit besitzt nur eine Sendespule L2, was insbesondere dann möglich ist, wenn die erzeugten HF-Signale dieselbe Trägerfrequenz aufweisen. Es besteht auch die Möglichkeit, mehrere Sende- und Empfangsspulen, beispielsweise jeweils eine Sende- und Empfangsspule für jedes mittels des Transponders durchführbare Übertragungsverfahren vorzusehen.

Bei verschiedenen Übertragungsstandards die, wie die Standards nach ISO 14443 und ISO 15693 mit derselben Trägerfrequenz arbeiten, werden die Daten mit unterschiedlicher Übertragungsraten übertragen, dementsprechend ist die Bandbreite der übertragenen HF-Signale unterschiedlich. Zur Minimierung des Signalstörabstandes ist eine Anpassung der Empfangsbandreite des Empfängers erforderlich. Diese Anpassung kann beispielsweise mittels einer -nicht eingezeichneten- veränderlichen Last erfolgen, die zwischen Ausgangsklemmen des Gleichrichters GL geschaltet ist, um die Last des aus der Spule L und dem Kondensator C gebildeten Parallelschwingkreises zu erhöhen. Dabei gilt, daß die Empfangsbandbreite um so geringer ist, je größer die Last ist. Die Last ist dabei z.B. abhängig von dem Steuersignal SS einstellbar, wobei das Steuersignal SS direkt oder nach Verarbeitung durch die Verarbeitungseinheit dazu verwendet werden kann, die Last einzustellen. Eine Last stellt auch der dem Gleichrichter GL nachgeschaltete Spannungsregler SR dar, der den Schwingkreis um so mehr belastet, je größer die Leistungsaufnahme der durch den Spannungsregler SR versorgten Komponenten ist. Bei Anwendung eines Übertragungsverfahrens mit hoher Datenrate und dementsprechend hoher Verarbeitungsgeschwindigkeit erhöht sich die Leistungsaufnahme der Schaltung, woraus eine höhere Belastung des Schwingkreises und somit eine geringere Übertragungsbandbreite resultiert. Eine Anpassung der Bandbreite an die übertragbare Leistung geschieht somit teilweise automatisch, insbesondere dann, wenn der Spannungsregler SR als Parallelspannungsregler, wie in Figur 4 abgebildet, ausgebildet ist.

Die Detektionseinheit DE erzeugt das Steuersignal SS abhängig von der Stärke des empfangenen HF-Signals, wobei abhängig von dem Steuersignal SS die Empfangseinheit EME, die Verarbeitungseinheit VE und die Sendeeinheit SE so ansteuerbar sind, daß ein Wechsel zu einem Übertragungsstandard erfolgt, der für den aus der Leistung des empfangenen Signals ermittelten Abstand zwischen Transponder und Schreib/Lesegerät besonders geeignet ist. Ein Wechsel des Ubertragungsstandard beispielsweise bei Entfernen der Chipkarte von dem Schreib/Lesegerät kann selbstverständlich nur in Übereinstimmung mit dem Schreib/Lesegerät erfolgen, in dem der Übertragungsstandard, zu dem gewechselt werden soll implementiert sein muß.

Zur Erzeugung des Steuersignals SS ist die Detektionseinheit DE vorzugsweise an den Spannungsregler SR des Empfängers EMP angeschlossen. Der Spannungsregler besteht, wie in Figur 4 dargestellt ist, im einfachsten Fall aus einer Referenzspannungsquelle Vref, einem Vergleicher OP1 und einem regelbaren Widerstand T2. Der Operationsverstärker OP1 vergleicht dabei die zwischen den Ausgangsklemmen des Gleichrichters anliegende, aus dem HF-Signal durch Gleichrichten erzeugte Spannung Vg mit der Referenzspannung Vref. Der Widerstandswert des zwischen die Ausgangsklemmen A1, A2 des Spannungsreglers SR geschalteten Widerstands T2 wird abhängig von der Differenz zwischen Vg und Vref eingestellt, wobei der Widerstand um so geringer ist, je größer Vg gegenüber Vref ist. Der Wert der Spannung Vg ist um so größer, je leistungsstärker das empfangene HF-Signal ist. Die Differenz zwischen der Spannung Vg und der konstanten Spannung Vref ist damit geeignet, als Maß für die Stärke des empfangenen HF-Signals zu dienen. Die Detektionseinheit DE besitzt im einfachsten Fall einen Komparator K, der die Spannung Vg mit der Spannung Vref vergleicht und an seinem Ausgang ein digitales Steuersignal zur Verfügung stellt, dessen Wert davon abhängt, ob die Spannung Vg größer als Verf ist und somit ein starker Eingangspegel angenommen wird, oder ob die Spannung Vg geringer als Vref ist und somit ein schwacher Eingangspegel angenommen wird. Der Komparator kann auch an einer anderen Stelle des Signalweges im Spannungsregler angeschaltet werden, um das Steuersignal zu erzeugen. Vorteilhafterweise besitzt die Detektionseinheit DE ein Abtast-Halteglied, welches dafür sorgt, daß kurzfristige Schwankungen der Spannung Vg nicht als Änderungen des Steuersignals SS weitergegeben werden.

Die dargestellte Detektionseinheit DE ist allerdings nur geeignet, wenn lediglich zwischen zwei Übertragungsstandards, beispielsweise einem für den Proximity-Bereich und einem für den Vicinity-Bereich gewählt werden soll. Für eine Auswahl aus mehr als zwei Übertragungsstandards abhängig von der Entfernung zwischen der Karte und dem Schreib/Lesegerät ist eine Detektionseinheit vorzusehen, die beispielsweise mittels eines Quantisierers ein Steuersignal zur Verfügung stellt welches mehr als zwei Werte annehmen kann.

Der funktionelle Aufbau eines Schreib/Lesegeräts mit Sendeeinheit, Empfangseinheit und Verarbeitungseinheit entspricht im wesentlichen dem des Transponders, auf eine detaillierte Darstellung ist daher verzichtet.

Gegenstand des Verfahrens ist des weiteren ein Verfahren zur kontaktlosen Datenübertragung, wie es insbesondere mit dem erfindungsgemäßen Übertragungssystem durchführbar ist. Das Verfahren sieht vor, einen Transponder mit einer Empfangseinheit, einer Verarbeitungseinheit, einer Sendeeinheit und einer Detektionseinheit zu verwenden, wobei die Empfangseinheit und die Sendeeinheit dazu ausgelegt sind, wenigstens zwei unterschiedlich modulierte und/oder kodierte HF-Signale, wie sie insbesondere Gegenstand unterschiedlicher Übertragungsstandards sind, zu empfangen und zu verarbeiten bzw. erzeugen zu können. Ziel des Verfahrens ist es insbesondere, das Übertragungsverfahren zu wählen, das abhängig von dem Abstand zwischen dem Transponder und der Schreib/Lesestation optimal ist.

Wird der Transponder in den Sendebereich einer Schreib/Lesestation gebracht und ein HF-Signal von dem Empfänger EMP empfangen erzeugen der Gleichrichter GL und der Spannungsregler SR eine Versorgungsspannung für die Sende-, Empfangs- und Verarbeitungseinheit SE, EME VE. Für den Transponder ist zunächst nicht erkennbar welcher Übertragungsstandard diesem HF-Signals zugrundeliegt, da wie bereits erwähnt unterschiedliche Übertragungsstandards dieselbe Trägerfrequenz nutzen. Eine erste Ausführungsform des Verfahrens sieht daher vor, mit Anliegen der Versorgungsspannung die Empfangseinheit EME und gegebenenfalls die Sendeeinheit SE zunächst für den Empfang und das Senden von HF-Signalen des Übertragungsstandards einzustellen, der hinsichtlich des Abstandes zwischen der Schreib/Lesestation und dem Transponder am robustesten ist. Dies setzt voraus, daß von der Schreib/Lesestation für die Kontaktaufnahme mit dem Transponder in regelmäßigen Zeitabständen Request-Signale des entsprechenden Standards übertragen werden. Ist der Kontakt hergestellt steht im folgenden am Ausgang der Detektionseinheit DE ein Steuersignal zur Verfügung welches abhängig von der empfangenen Leistung des HF-Signals ist. Je nachdem, wie nahe sich die Chipkarte am Schreib/Lesegerät befindet wird durch Umschalten der Signalverarbeitungseinheiten der Sende- und Empfangseinheit SE, EME auf einen anderen Übertragungsstandard gewechselt, vorausgesetzt das Schreib/Lesegerät beherrscht diesen Standard.

Wie erwähnt besteht auch die Möglichkeit, den Transponder gleichzeitig auf den Empfang von Signalen, die mit unterschiedlichen Verfahren übertragen wurden, einzustellen, um zunächst festzustellen, welches Übertragungsverfahren durch das Schreib/Lesegerät angewandt wird. Die Komponenten der Empfangs- und Sendeeinheiten, die für dieses Verfahren nicht benötigt werden, können dann abgeschaltet werden bzw. es kann abhängig von der Stärke des empfangenen Signals auf ein anderes Übertragungsverfahren gewechselt werden.

Ein weiteres Verfahren zur ersten Kontaktaufnahme des Transponders mit dem Schreib/Lesegerät sieht vor, daß ab dem Anliegen der Versorgungsspannung an der Verarbeitungseinheit VE, von der Verarbeitungseinheit VE die vorhandenen Signalverarbeitungseinheiten des Empfängers EME nacheinander angesteuert werden, bis durch eine der Signalverarbeitungseinheiten ein gültiges Signal, üblicherweise ein Request-Signal, von dem Schreib/Lesegerät empfangen wird. Jede der Signalverarbeitungseinheiten ist dabei auf den Empfang und die Verarbeitung der Signale eines Übertragungsverfahrens ausgelegt, wobei sich die Signale unterschiedlicher Standards üblicherweise in der Modulation und/oder der Kodierung unterscheiden. Aus der Signalverarbeitungseinheit die gerade aktiv ist erkennt die Verarbeitungseinheit VE das von der Schreib/Lesestation verwendete Übertragungsverfahren. Die Verarbeitungseinheit wählt dann die entsprechende Signalverarbeitungseinheit der Sendeeinheit aus, um Kontakt mit der Schreib/Lesestation herzustellen. Ein Wechsel des Übertragungsverfahrens kann nach der Herstellung des ersten Kontakts abhängig von der Leistung der empfangenen HF-Signal erfolgen.

Die Kriterien für einen Wechsel des Übertragungsverfahrens sind in der Verarbeitungseinheit abgelegt, die vorzugsweise programmierbar und beispielsweise ROM oder EEPROM aufweist. Dies bietet insbesondere den Vorteil, daß auch für Anwendungen, in denen nur ein Übertragungsverfahren verwendet werden soll, dieselbe Hardware im Transponder verwendet werden kann. Die anwendbaren Übertragungsverfahren, für die die Hardwarevoraussetzungen auf dem Transponder erfüllt sind, werden durch die Verarbeitungseinheit durch Ansteuerung der entsprechenden Kodierer, Modulatoren, Demodulatoren und Dekoder ausgewählt.

Ändert sich die vom Transponder empfangene Leistung und ergibt sich nach den in der Detektionseinheit DE bzw. Verarbeitungseinheit VE abgelegten Regeln, daß ein Wechsel des Übertragungsverfahrens vorteilhaft ist, wird ein entsprechender Code an das Schreib/Lesegerät übersandt, damit dieses auf das andere Übertragungsverfahren umschalten kann.

## Patentansprüche

1. Kontaktloses Datenübertragungssystem mit einem Transponder (1) und einer Schreib/Lesestation, zwischen denen ein Datenaustausch mittels eines HF-Signals durchführbar ist, wobei der Transponder (1) folgende Merkmale aufweist:
- eine Empfangseinheit (EME) mit einer Empfangsschnittstelle (L) zum Aufnehmen des HF-Signals und mit einer Ausgangsklemme, an der ein aus dem HF-Signal gebildetes Datensignal (DS1, DS11, DS12) anliegt, wobei die Empfangseinheit (EME) Mittel (EMP, DEM1, DEM2, DEC1, DEC2) zum Empfang und zur Verarbeitung von wenigstens zwei unterschiedlich modulierten und/oder kodierten HF-Signalen aufweist;
- eine Verarbeitungseinheit (VE) mit einer ersten Eingangsklemme (EK1, EK11, EK12), die an die Ausgangsklemme der Empfangseinheit (EME) angeschlossen ist;
- eine Detektionseinheit (DE) zur Bereitstellung eines von der Leistung des empfangenen HF-Signals abhängigen Steuersignals (SS), wobei die Empfangseinheit (EME) und/oder die Verarbeitungseinheit (VE) abhängig von dem Steuersignal (SS) ansteuerbar sind; und
- eine Sendeeinheit (SE), die abhängig von dem Steuersignal (SS) zur Erzeugung eines in einer ersten oder zweiten Weise modulierten und/oder kodierten HF-Signals angesteuert wird.
**dadurch gekennzeichnet, daß**
die Schreib/Lesestation Mittel aufweist, um eine Fehlerrate des von dem Transponder empfangenen HF-Signals auszuwerten und abhängig von der Fehlerrate unterschiedlich modulierte und/oder kodierte HF-Signale zu erzeugen.

2. Datenübertragungssystem nach Anspruch 1,
**dadurch gekennzeichnet**, die Sendeeinheit (SE) mit einer Eingangsklemme versehen ist, die an eine Ausgangsklemme (AK1, AK11, AK12) der Verarbeitungseinheit (VE) zur Aufnahme eines Datensignals (DS2, DS21, DS22) angeschlossen ist und mit einer Sendeschnittstelle (L2) zum Senden eines die Information des Datensignals (DS2) tragenden HF-Signals, wobei die Sendeeinheit (SE) Mittel zur Generierung von wenigstens zwei unterschiedlich modulierten und/oder kodierten HF-Signalen aus dem Datensignals (DS2) aufweist.

3. Datenübertragungssystem nach einem der vorangehenden Ansprüche,
**dadurch gekennzeichnet, daß**
die Detektionseinheit (DE) direkt an die Empfangseinheit und/oder Sendeeinheit (EME) zur Ansteuerung angeschlossen ist.

4. Datenübertragungssystem nach einem der Ansprüche 1 bis 3,
**dadurch gekennzeichnet, daß**
die Detektionseinheit (DE) an die Verarbeitungseinheit (VE) zur Zuführung des Steuersignals (SS) angeschlossen ist und daß die Verarbeitungseinheit (VE) zur Ansteuerung der Empfangseinheit (EME) und/oder Sendeeinheit (SE) an diese angeschlossen ist.

5. Datenübertragungssystem nach einem der vorangehenden Ansprüche,
**dadurch gekennzeichnet, daß**
die Empfangseinheit wenigstens zwei Signalverarbeitungseinheiten mit folgenden Komponenten aufweist: einem Empfänger (EMP), einem Demodulator (DEM1, DEM2) und einem Dekoder (DEC1, DEC2).

6. Datenübertragungssystem nach Anspruch 5,
**dadurch gekennzeichnet, daß**
eine oder mehrere der Komponenten (EMP, DEM1, DEM2, DEC1, DEC2) den Signalverarbeitungseinheiten gemeinsam ist.

7. Datenübertragungssystem nach Anspruch 5 oder 6,
**dadurch gekennzeichnet, daß**
wenigstens eine der Komponenten jeder Signalverarbeitungseinheit abhängig von dem Steuersignal (SS) ansteuerbar ist.

8. Datenübertragungssystem nach einem der vorangehenden Ansprüche,
**dadurch gekennzeichnet, daß**
die Detektionseinheit (DE) an eine Ausgangsklemme der Empfangseinheit (EME) angeschlossen ist.

9. Datenübertragungssystem nach einem der vorangehenden Ansprüche,
**dadurch gekennzeichnet, daß**
die Empfangseinheit (EME) wenigstens einen Spannungsregler (SR) zur Bereitstellung einer Versorgungsspannung (Vdd, Vss) aufweist, an den die Detektionseinheit (DE) angeschlossen ist.

10. Datenübertragungssystem nach einem der vorangehenden Ansprüche,
**dadurch gekennzeichnet, daß**
eine Bandbreite des Empfängers (EMP) abhängig von dem Steuersignal (SS) einstellbar ist.

11. Datenübertragungssystem nach einem der vorangehenden Ansprüche,
**dadurch gekennzeichnet, daß**
die Sendeeinheit zwei Signalverarbeitungseinheiten mit folgenden Komponenten aufweist: einem Kodierer (COD1, COD2), einen Modulator (MOD1, MOD2), einen Sender (L2).

12. Datenübertragungssystem nach Anspruch 11,
**dadurch gekennzeichnet, daß**
den Signalverarbeitungseinheiten wenigstens eine der Komponenten (COD1, COD2, MODI, MOD2) gemeinsam ist.

13. Datenverarbeitungsystem nach einem der vorangehenden Ansprüche,
**dadurch gekennzeichnet, daß**
die Schreib/Lesestation Mittel aufweist, ein von dem Transponder übermitteltes HF-Signal zu empfangen.

14. Datenübertragungssystem nach einem der vorangehenden Ansprüche,
**dadurch gekennzeichnet, daß**
die Schreib/Lesestation eine Empfangseinheit zum Empfang der HF-Signale des Transponders und eine Detektionseinheit zur Bereitstellung eines von der Leistung des empfangenen HF-Signals abhängigen Steuersignals aufweist, wobei die Empfangseinheit und/oder eine der Empfangseinheit nachgeschaltete Verarbeitungseinheit abhängig von dem Steuersignal ansteuerbar sind.

15. Verfahren zum Betreiben einer Anordnung nach einem der vorhergehenden Ansprüche, mit den Schritten:
- Erfassen einer Empfangsfeldstärke am Transponder;
- Erzeugen eines von der Empfangsfeldstärke abhängigen Steuersignals im Transponder;
- Einstellen einer Modulationsart in der Sendeeinheit des Transponders, die vom Steuersignal abhängig ist,
- Auswerten einer Fehlerrate des von dem Transponder empfangenen HF-Signals und
- Erzeugung unterschiedlich modulierter und/oder kodierter HF-Signale abhängig von der Fehlerrate.

## Claims

1. Contactless data transmission system with a transponder (1) and a read/write station, between which a data exchange can be carried out by means of an RF signal, whereby the transponder (1) has the following features:
- a receive unit (EME) with a receive interface (L) for receiving the RF signal and with an output terminal, at which a data signal (DS1, DS11, DS12) formed from the RF signal is present, whereby the receive unit (EME) has means (EMP, DEM1, DEM2, DEC1, DEC2) for receiving and processing at least two differently modulated and/or coded RF signals;
- a processing unit (VE) with a first input terminal (EK1, EK11, EK12) which is connected to the output terminal of the receive unit (EME);
- a detection unit (DE) for providing a control signal (SS) depending on the power of the received RF signal, whereby the receive unit (EME) and/or the processing unit (VE) can be controlled depending on the control signal (SS); and
- a transmit unit (SE) which is controlled depending on the control signal (SS) in order to generate an RF signal modulated and/or coded in a first or second manner,
**characterized in that** the read/write station has means for evaluating an error rate of the RF signal received from the transponder, and for generating differently modulated and/or coded RF signals depending on the error rate.

2. Data transmission system according to Claim 1,
**characterized in that**
the transmit unit (SE) is provided with an input terminal which is connected to an output terminal (AK1, AK11, AK12) of the processing unit (VE) to receive a data signal (DS2, DS21, DS22), and with a transmit interface (L2) for transmitting an RF signal carrying the information of the data signal (DS2), whereby the transmit unit (SE) has means for generating at least two differently modulated and/or coded RF signals from the data signal (DS2).

3. Data transmission system according to one of the preceding claims,
**characterized in that**
the detection unit (DE) is connected directly to the receive unit and/or transmit unit (EME) for control purposes.

4. Data transmission system according to one of Claims 1 to 3,
**characterized in that**
the detection unit (DE) is connected to the processing unit (VE) to supply the control signal (SS), and that the processing unit (VE) is connected to the receive unit (EME) and/or transmit unit (SE) in order to control the said units.

5. Data transmission system according to one of the preceding claims,
**characterized in that**
the receive unit has at least two signal processing units with the following components: a receiver (EMP), a demodulator (DEM1, DEM2) and a decoder (DEC1, DEC2).

6. Data transmission system according to Claim 5,
**characterized in that**
one or more of the components (EMP, DEM1, DEM2, DEC1, DEC2) is common to the signal processing units.

7. Data transmission system according to Claim 5 or 6,
**characterized in that**
at least one of the components of each signal processing unit can be controlled depending on the control signal (SS).

8. Data transmission system according to one of the preceding claims,
**characterized in that**
the detection unit (DE) is connected to an output terminal of the receive unit (EME).

9. Data transmission system according to one of the preceding claims,
**characterized in that**
the receive unit (EME) has at least one voltage regulator (SR) to provide a supply voltage (Vdd, Vss), to which the detection unit (DE) is connected.

10. Data transmission system according to one of the preceding claims,
**characterized in that**
a bandwidth of the receiver (EMP) can be set depending on the control signal (SS).

11. Data transmission system according to one of the preceding claims,
**characterized in that**
the transmit unit has two signal processing units with the following components: a coder (COD1, COD2), a modulator (MOD1, MOD2), a transmitter (L2).

12. Data transmission system according to Claim 11,
**characterized in that**
at least one of the components (COD1, COD2, MOD1, MOD2) is common to the signal processing units.

13. Data transmission system according to one of the preceding claims,
**characterized in that**
the read/write station has means for receiving an RF signal transmitted by the transponder.

14. Data transmission system according to one of the preceding claims,
**characterized in that**
the read/write station has a receive unit to receive the RF signals of the transponder, and a detection unit to provide a control signal depending on the power of the received RF signal, whereby the receive unit and/or a processing unit connected downstream of the receive unit can be controlled depending on the control signal.

15. Method for operating an arrangement as claimed in one of the preceding claims, with the following steps:
- recording of a receive field strength at the transponder;
- generation of a control signal in the transponder depending on the receive field strength;
- setting of a modulation type in the transmit unit of the transponder which is dependent on the control signal;
- evaluation of an error rate of the RF signal received from the transponder, and
- generation of differently modulated and/or coded RF signals depending on the error rate.

## Revendications

1. Système de transmission de données sans contact comprenant un transpondeur (1 ) et un poste d'écriture/lecture, entre lesquels un échange de données peut être effectué au moyen d'un signal HF, le transpondeur (1) ayant les caractéristiques suivantes :
- une unité (EME) de réception ayant un interface (L) de réception du signal HF et une borne de sortie à laquelle s'applique un signal (DS1, DS11, DS12) de données formé à partir du signal HF, l'unité (EME) de réception ayant des moyens (EMP, DEM1, DEM2, DEC1, DEC2) de réception et de traitement d'au moins deux signaux HF modulés et/ou codés différemment ;
- une unité (VE) de traitement ayant une première borne (EK1, EK11, EK12) d'entrée qui est reliée à la borne de sortie de l'unité (EME) de réception ;
- une unité (DE) de détection de mise à disposition d'un signal (SS) de commande dépendant de la puissance du signal HF reçu, l'unité (EME) de réception et/ou l'unité (VE) de traitement pouvant être commandées en fonction du signal (SS) de commande ; et
- une unité (SE) d'émission qui est commandée en fonction du signal (SS) de commande pour la production d'un signal HF modulé et/ou codé suivant une première ou une deuxième façon,
**caractérisé en ce que** le poste d'écriture/lecture comprend des moyens pour exploiter les taux d'erreur du signal HF reçus par le transpondeur et pour produire, en fonction du taux d'erreur, des signaux HF modulés et/ou codés différemment.

2. Système de transmission de données suivant la revendication 1,
**caractérisé en ce que** l'unité (SE) d'émission est munie d'une borne d'entrée, qui est reliée à une borne (AK1, AK11, AK12) de sortie de l'unité (VE) de traitement pour la réception d'un signal (DS2, DS21, DS22) de données et comprend un interface (L2) d'émission pour l'émission d'un signal HF portant l'information du signal (DS2) de données, l'unité (SE) d'émission ayant des moyens de production à partir du signal (DS2) de données d'au moins deux signaux HF modulés et/ou codés différemment.

3. Système de transmission de données suivant l'une des revendications précédentes,
**caractérisé en ce que** l'unité (DE) de détection est reliée pour la commande directement à l'unité de réception et/ou à l'unité (EME) d'émission.

4. Système de transmission de données suivant l'une des revendications 1 à 3
**caractérisé en ce que** l'unité (DE) de détection est reliée pour l'envoi du signal (SS) de commande à l'unité (VE) de traitement et **en ce que** l'unité (VE) de traitement est reliée pour la commande de l'unité (EME) de réception et/ou de l'unité (SE) d'émission à celle-ci.

5. Système de transmission de données suivant l'une des revendications précédentes,
**caractérisé en ce que** l'unité de réception a au moins deux unités de traitement du signal ayant des composants suivants : un récepteur (EMP), un démodulateur (DEM1, DEM2) et un décodeur (DEC1, DEC2).

6. Système de transmission de données suivant la revendication 5,
**caractérisé en ce qu'**un ou plusieurs des composants (EMP, DEM 1, DEM2, DEC1, DEC2) est commun aux unités de traitement du signal.

7. Système de transmission de données suivant la revendication 5 ou 6,
**caractérisé en ce qu'**au moins l'un des composants de chaque unité de traitement du signal peut être commandé en fonction du signal (SS) de commande.

8. Système de transmission de données suivant l'une des revendications précédentes,
**caractérisé en ce que** l'unité (DE) de détection est reliée à une borne de sortie de l'unité (EME) de réception.

9. Système de transmission de données suivant l'une des revendications précédentes,
**caractérisé en ce que** l'unité (EME) de réception a au moins un régulateur (SR) de tension pour mettre à disposition une tension (Vdd, Vss) d'alimentation qui est appliquée à l'unité (DE) de détection.

10. Système de transmission de données suivant l'une des revendications précédentes,
**caractérisé en ce qu'**une largeur de bande du récepteur (EMP) peut être réglée en fonction du signal (SS) de commande.

11. Système de transmission de données suivant l'une des revendications précédentes,
**caractérisé en ce que** l'unité d'émission a deux unités de traitement du signal ayant les composants suivants: un codeur (COD1, COD2), un modulateur (MOD1, MOD2), un émetteur (L2).

12. Système de transmission de données suivant la revendication 11,
**caractérisé en ce qu'**au moins l'un des composants (COD1, COD2, MOD1, MOD2) est commun aux unités de traitement du signal.

13. Système de transmission de données suivant l'une des reve ndications précédentes,
**caractérisé en ce que** le poste d'écriture/lecture a des moyens de réception d'un signal HF transmis par le transpondeur.

14. Système de transmission de données suivant l'une des revendications précédentes,
**caractérisé en ce que** le poste d'écriture/lecture a une unité de réce ption des signaux HF du transpondeur et une unité de détection de mise à disposition d'un signal de commande en fonction de la puissance du signal HF reçu, l'unité de réception et/ou une unité de traitement en aval de l'unité de réce ption pouvant être commandée en fonction du signal de commande.

15. Procédé pour faire fonctionner un montage suivant l'une des reve ndications précédentes, comprenant les stades :
- de détection d'une intensité du champ de réception sur le transpondeur ;
- de production dans le transpondeur d'un signal de commande en fonction de l'intensité du champ de réception ;
- de réglage d'un type de modulation dans l'unité d'émission du transpondeur qui dépend du signal de commande ;
- d'exploitation d'un taux d'erreur du signal HF reçu par le transpondeur et
- de production de signaux HF modulés et/ou codés différemment en fonction du taux d'erreur.
